# FASCICULE DE BREVET EUROPEEN

(11) **EP 0 456 313 B1**
(45) Date de publication et mention de la délivrance du brevet: **09.08.1995**
(21) Numéro de dépôt: 91201055.0
(22) Date de dépôt: 03.05.1991
(51) Int. Cl.: B60K 15/04, F16K 24/04, F16K 17/36

(54) **Clapet de sécurité notamment pour une canalisation de mise à l'air d'un réservoir à carburant**
Sicherheitsventil, insbesondere für die Entlüftungskanalisation eines Kraftstoffbehälters
Safety valve, particularly for a ventilation conduit of a fuel tank

(30) Priorité: 11.05.1990 FR 9006016
(43) Date de publication de la demande: 13.11.1991
(73) Titulaire: SOCIETE DE TRANSFORMATION DES MATIERES PLASTIQUES (Société Anonyme), F-53032 Laval Cedex (FR)
(72) Inventeur: Deparis, Eric, F-53260 Parne/Roc (FR); Percebois, Serge, F-53260 Entrammes (FR)
(74) Mandataire: Dufrasne, Eugène

(56) Documents cités:
- EP-A- 0 340 062
- US-A- 3 765 435
- US-A- 4 917 157
- MACHINE DESIGN vol. 55, no. 23, 06 octobre 1983, USA page 64 CLEVELAND US:"Scanning for ideas"

## Description

La présente invention concerne un clapet de sécurité qui convient particulièrement pour équiper la canalisation de mise à l'air d'un réservoir à carburant équipant un véhicule automobile.

Actuellement, les réservoirs à carburant sont généralement équipés, entre autres, d'une conduite de mise à l'air en relation directe avec l'atmosphère ou via une capacité de filtrage généralement dénommée canister. Les rôles de cette dernière canalisation sont, d'une part, de permettre à l'air de pénétrer librement dans le réservoir pour compenser le volume de carburant consommé (fonction dépression) et, d'autre part, de permettre l'évacuation d'un excès de vapeur de carburant dans le réservoir pour éviter une mise en pression de celui-ci (fonction pression).

Un clapet de sécurité pour une canalisation de mise à l'air d'un réservoir à carburant est décrit selon le brevet des Etats-Unis 4,917,157, comprenant une enceinte au travers de laquelle l'air peut normalement être évacué au cours du remplissage du réservoir, causant alors une succion qui maintient en position basse un flotteur, ledit flotteur pouvant par coulissement vertical obturer l'orifice de sortie par l'intermédiaire d'un pointeau et empêcher alors le passage éventuel de carburant liquide lors du remplissage. Toutefois, ce clapet de sécurité ne permet pas, même lorsqu'il est en service durant le remplissage, le déplacement du flotteur en cas d'inclinaison du véhicule. En outre, il ne permet pas l'entrée (dépression) ou la sortie (pression) d'air ni d'empêcher la sortie de carburant liquide en d'autres temps que lors du remplissage, ces fonctions devant être remplies selon le document cité par des moyens supplémentaires.

Le brevet des Etats-Unis 3,765,435 décrit par ailleurs un clapet de sécurité pour réservoir à carburant permettant d'empêcher l'évacuation de carburant liquide notamment en cas d'inclinaison du véhicule, par déplacement d'une bille sur un plan incliné entraînant le coulissement d'un pointeau et l'obturation de l'orifice de sortie du clapet.

La canalisation de mise à l'air peut, par ailleurs être obturée, lors d'un remplissage du réservoir, pour emprisonner un volume d'air dans la partie supérieure du réservoir de façon à permettre, après remplissage, une expansion du carburant pour compenser sa dilatation, par exemple sous l'effet d'une variation de température. A cet effet, cette canalisation est généralement réalisée en deux parties, une première partie mettant en relation le réservoir avec l'embouchure de remplissage du réservoir et une seconde partie mettant cette embouchure en relation avec l'atmosphère.

De cette façon, la seconde partie de la canalisation peut permettre également l'évacuation des vapeurs de carburant dégagées, lors d'un remplissage, du réservoir par la conduite de remplissage et par la conduite de dégazage.

En outre, on peut ainsi prévoir, dans l'embouchure de la conduite de remplissage, un système à clapet permettant d'obturer la première partie de la canalisation de mise à l'air lors d'un remplissage du réservoir.

Pour des raisons de sécurité, il convient évidemment que la seconde partie de la canalisation de mise à l'air ne puisse en aucun cas (accident modifiant le centre de gravité du véhicule, engorgement du réservoir, etc) permettre le passage de carburant liquide.

La présente invention a, dès lors, pour objet de fournir un clapet de sécurité pouvant équiper la seconde partie de la canalisation de mise à l'air et qui permet à celle-ci d'assurer les fonctions désirées tout en excluant tout risque d'évacuation de carburant liquide.

L'invention concerne, dès lors, un clapet de sécurité pour une canalisation de mise à l'air d'un réservoir à carburant permettant la mise à l'air et empêchant le passage de carburant liquide en toute éventualité comprenant une enceinte fermée équipée, à sa partie inférieure, d'un orifice d'entrée raccordé à la canalisation de mise à l'air et, à sa partie supérieure, d'un orifice de sortie également raccordé à la canalisation de mise à l'air caractérisé en ce que :
a) la partie inférieure de l'enceinte comporte une coupelle interne circulaire fixe maintenue espacée de la paroi interne de l'enceinte et de l'orifice inférieur d'entrée,
b) la coupelle est surmontée d'un équipage déplaçable verticalement comportant un flotteur de forme générale tronconique ou sphérique et un pointeau supérieur solidaire du flotteur pouvant, en position haute de l'équipage, obturer l'orifice supérieur de l'enceinte, des moyens étant prévus pour provoquer un déplacement vers le haut de l'équipage suite à une inclinaison de l'enceinte,
c) l'espace entre la paroi interne de l'enceinte et la coupelle est profilé de façon à déterminer un passage annulaire en forme de venturi qui est maintenu en relation par au moins un passage avec le volume compris entre la coupelle et le flotteur de l'équipage de façon telle que le passage des vapeurs de carburant dans cet espace entraîne une mise en dépression de ce volume.

L'enceinte fermée peut avoir une forme quelconque mais, en général, on préfère que celle-ci soit réalisée en deux parties, la partie inférieure ayant une forme générale hémisphérique et étant raccordée à une partie supérieure de forme générale tronconique.

La coupelle, de forme générale circulaire et de diamètre inférieur au diamètre interne de l'enceinte au niveau de son placement, est maintenue en place par des ailettes de fixation à la parois interne de l'enceinte ou par tout autre moyen. La face interne de la coupelle, ainsi qu'il sera explicité plus loin peut être soit de profil conique ou de profil sensiblement plan, une encoche sphérique étant dans ce dernier cas prévue en son centre.

De préférence, les centres des orifices d'entrée et de sortie de l'enceinte et le centre de la coupelle sont coaxiaux.

L'enceinte, la coupelle et l'équipage déplaçable verticalement peuvent être réalisés en tout matériau mais en général on préfère que ceux-ci soit réalisés à partir de matières thermoplastiques. Dans ce cas, il convient évidemment de choisir celles-ci de façon telle qu'elles résistent aux contraintes d'exploitation. Les matériaux choisis doivent, en particulier, être évidemment inertes vis-à-vis des carburants.

Ainsi, par exemple, il a été constaté que les deux éléments constituant l'enceinte peuvent avantageusement être produits par moulage par injection au départ de polyoléfines.

Le flotteur, de forme générale tronconique similaire à celle de la partie supérieure de l'enceinte peut être fermé et creux ou être réalisé à partir d'une matière thermoplastique expansée de préférence à cellules fermées.

Le pointeau, solidaire du flotteur, est de préférence tubulaire et disposé de façon coaxiale par rapport à l'orifice de sortie de façon à s'engager dans cet orifice en position haute de l'équipage et être en sorte guidé par cet orifice. Dans ce cas, le diamètre externe du pointeau correspond sensiblement à celui de l'orifice. Le pointeau est généralement équipé sur son pourtour d'un joint d'étanchéité, par exemple d'un joint membrane en élastomère fluoré, qui, en position haute du pointeau, assure l'obturation de l'orifice de sortie. De manière préférée, le joint membrane est tel que la fuite maximum de 0 à 10 kPa soit de 0,005 l/min.

Le pointeau peut, en outre, être avantageusement équipé d'un clapet de surpression pour donner une sécurité supplémentaire.

Les moyens pour provoquer un déplacement vers le haut de l'équipage constitué du flotteur et du pointeau suite à une inclinaison de l'enceinte peuvent être quelconque.

Selon une première variante de réalisation possible, le déplacement est obtenu par l'intermédiaire d'une bille, en métal tel que l'acier ou en un autre matériau tel que le verre, qui est disposée dans la coupelle de profil interne conique, la partie inférieure du flotteur de l'équipage mobile pouvant prendre appui sur cette bille.

Selon une autre variante de réalisation possible, le déplacement est également obtenu par l'intermédiaire d'une bille qui est disposée dans la coupelle, cette fois de profil sensiblement plan et, de préférence, pourvue en son centre d'une encoche sphérique recevant ladite bille, la partie inférieure du flotteur pouvant prendre appui sur cette bille et étant profilée en forme de cône inversé. Dans cette variante de réalisation, l'encoche sphérique de la coupelle est dimensionnée de façon à stabiliser la bille au centre de la coupelle de façon à éviter des obturations intempestives du clapet pour des inclinaisons normales de l'enceinte ou par effet de force centrifuge, par exemple, lorsque le véhicule effectue un virage.

Le profilage en forme de venturi de l'espace annulaire entre la paroi interne de l'enceinte et la coupelle peut être situé en tout endroit le long de la paroi externe de la coupelle mais on préfère généralement que celui-ci soit situé au niveau du bord supérieur de la coupelle. Dans ce dernier cas, les passages de mise en relation avec le volume compris entre la coupelle et le flotteur de l'équipage sont constitués par des encoches taillées et réparties dans la paroi du bord de la coupelle. Les passages peuvent également être constitués par des perforations effectuées et réparties annulairement dans la paroi de la coupelle ou sur la base du flotteur.

Le clapet de sécurité conforme à l'invention et son fonctionnement sont, par ailleurs, explicités par les figures des dessins annexés, dans lequels :
la fig. 1 est une vue générale d'un réservoir à carburant pour véhicule automobile
la fig. 2 est une vue en coupe d'un premier mode de réalisation d'un clapet de sécurité conforme à l'invention
la fig. 3 est une vue en coupe d'un autre mode de réalisation d'un clapet de sécurité conforme à l'invention
la fig. 4 est une vue en coupe d'un clapet de sécurité identique à celui de la fig. 3 dont le pointeau est équipé d'un clapet de surpression
les fig. 5 à 9 montrent différents cas de fonctionnement d'un clapet de sécurité selon la fig. 3.

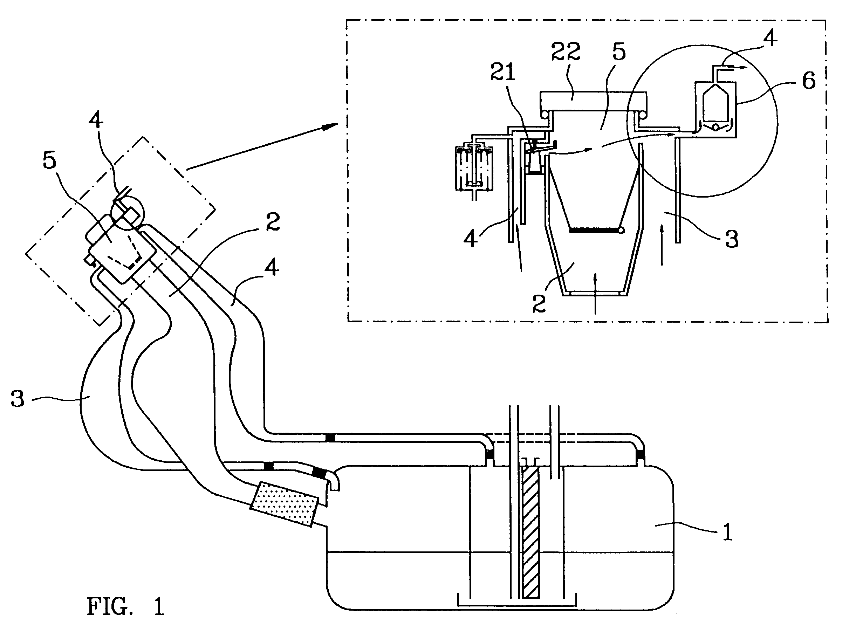

Ainsi qu'il apparaît sur la fig. 1, le réservoir 1 d'un véhicule automobile comporte une canalisation de remplissage 2 pourvue d'une embouchure obturable 5, une canalisation de dégazage 3 raccordée à l'embouchure 5 et une canalisation de mise à l'air 4 dont une première partie est également raccordée à l'embouchure 5 et une seconde raccorde cette embouchure à l'atmosphère directement ou via un canister de récupération (non représenté). Dans la partie agrandie de la fig. 1, on montre le positionnement habituel du clapet de sécurité 6 conforme à l'invention (représenté schématiquement). Par ailleurs, sur cette partie agrandie, on remarque que la seconde partie de la canalisation de mise à l'air reprend non seulement les fluides s'écoulant dans la première partie mais encore les fluides s'écoulant par la canalisation de dégazage 3 et par la conduite de remplissage 2. Enfin, sur cette partie agrandie, on a représenté schématiquement un système à clapet 21 qui a pour fonction d'obturer la première partie de la canalisation de mise à l'air 4 lors de l'enlèvement du bouchon 22 en vue d'un remplissage du réservoir 1.

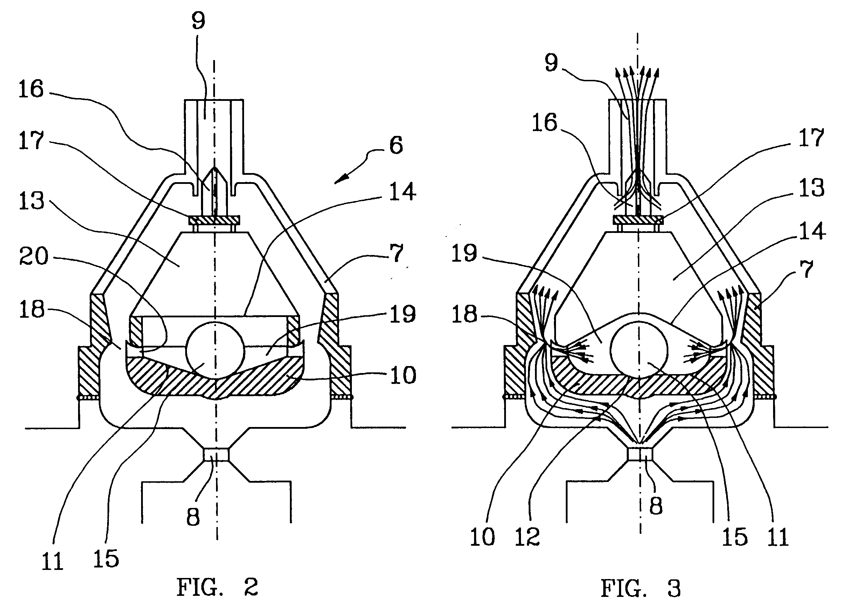

Ainsi qu'il apparaît plus particulièrement aux fig. 2 à 4, le clapet de sécurité conforme à l'invention comporte une enceinte externe 7 équipée, à sa base, d'un orifice d'entrée 8 et, à sa partie supérieure, d'un orifice de sortie 9. Dans cette enceinte est disposée une coupelle circulaire 10 fixe qui est maintenue espacée de la paroi interne de l'enceinte 7. Selon un premier mode de réalisation (fig. 2) la paroi interne 11 de la coupelle 10 est de profil conique et selon un second mode de réalisation (fig. 3) la paroi interne 11 de la coupelle est plan et pourvu en son centre d'une encoche sphérique 12.

L'enceinte 7 contient également un équipage déplaçable verticalement comprenant un flotteur 13 creux (fig. 2) ou réalisé en matière plastique cellulaire (fig. 3). En position normale, le flotteur repose sur le bord de la coupelle 10. Selon la première variante de réalisation la base 14 du flotteur 13 est plane (fig. 2) et selon la seconde variante (fig. 3) cette base 14 est profilée en forme de cone inversé. Une bille 15 de diamètre adéquat est disposée dans la coupelle 10. Dans le second mode de réalisation, l'encoche sphérique 12 a pour fonction de stabiliser la bille 15 au centre de la coupelle et d'empêcher un déplacement intempestif de cette bille sous l'effet d'une faible inclinaison de l'enceinte ou par inertie, par exemple lors d'une modification normale de la trajectoire du véhicule automobile.

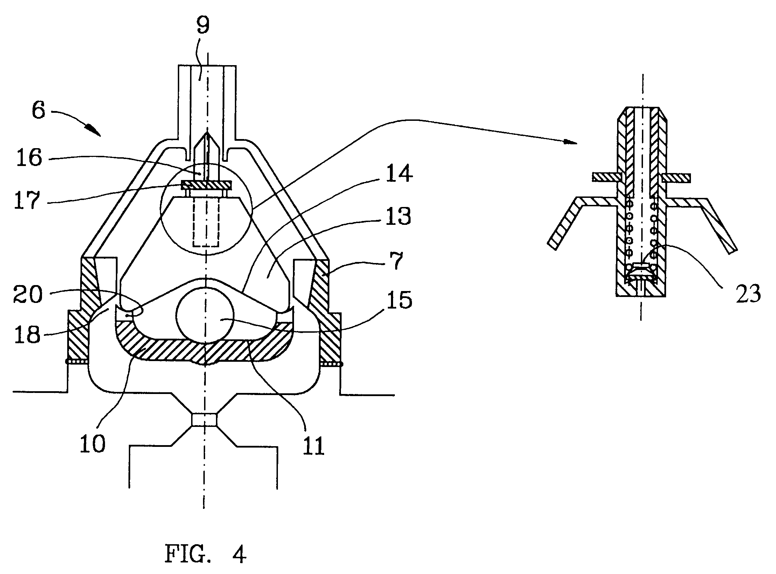

Le flotteur 13 est équipé à sa partie supérieure d'un pointeau 16 qui, en position haute du flotteur, obture l'orifice supérieur 9 de l'enceinte 7 par l'intermédiaire d'un joint membrane 17. Ainsi qu'il est représenté à la fig. 4 (partie agrandie), le pointeau peut éventuellement être équipé d'un clapet de surpression 23.

En outre, il apparaît que l'espace annulaire entre la paroi interne de l'enceinte 7 et la coupelle 10 est profilé de façon à former un venturi 18. Ce venturi est maintenu en relation avec le volume 19 compris entre la coupelle 10 et la base du flotteur 13 par des passages constitués par des encoches 20 taillées dans le bord de la coupelle 10 et réparties le long de ce bord.

Ainsi qu'il apparaît plus particulièrement aux fig. 3 et 5 à 9, le clapet de sécurité selon l'invention permet à la canalisation de mise à l'air de remplir parfaitement ses fonctions et ferme cette canalisation de façon sure dans toute éventualité risquant d'entraîner une sortie non souhaitée de carburant liquide.

Ainsi qu'il est montré aux fig. 3 et 6 , le clapet de sécurité permet, en situation normale, l'évacuation des vapeurs de carburant. Dans ce cas, la dépression créée dans le volume 19 contribue efficacement à maintenir le flotteur en position basse, nonobstant notamment sa légèreté, ce qui permet d'atteindre des débits d'évacuation très importants sans risque d'obturation de l'orifice 9.

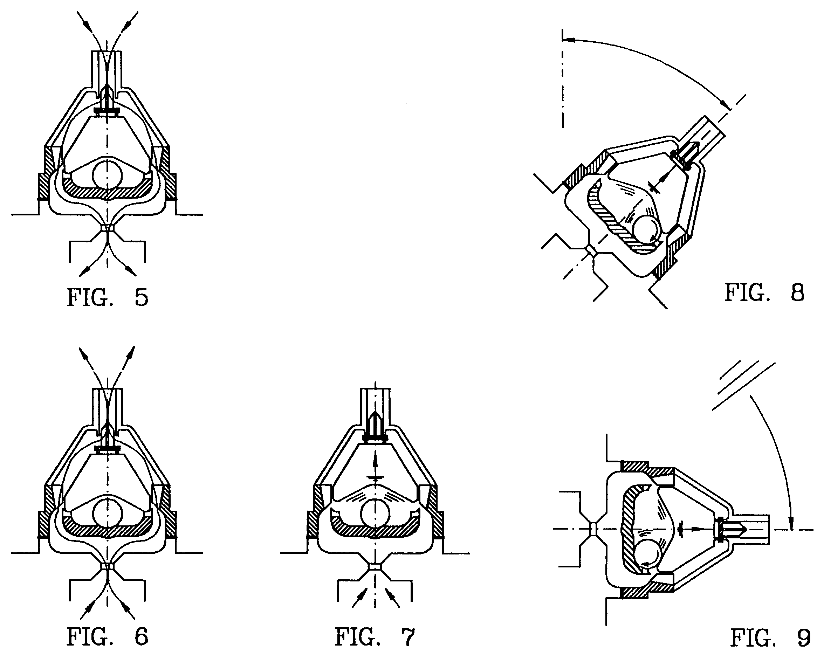

En outre, ainsi qu'il apparaît à la fig. 5, en situation normale, le clapet permet une rentrée d'air dans le réservoir pour compenser le carburant consommé.

Par contre, ainsi qu'il apparaît à la fig. 7, en cas d'une remontée du carburant liquide par la canalisation de mise à l'air, le carburant pénétrant dans l'enceinte entraîne le flotteur 13 vers le haut et partant une obturation sure de l'orifice de sortie 9.

Enfin, en cas d'inclinaison anormale de l'enceinte, suite, par exemple, à un accident, la bille 15 se déplace par gravité dans la coupelle 10 et provoque également la montée du flotteur 13 et partant l'obturation sure de l'orifice de sortie 9.

## Revendications

1. Clapet de sécurité pour une canalisation de mise à l'air (4) d'un réservoir à carburant (1) permettant la mise à l'air et empêchant le passage de carburant liquide en toute éventualité comprenant une enceinte fermée (7) équipée, à sa partie inférieure, d'un orifice d'entrée (8) raccordé à la canalisation de mise à l'air (4) et, à sa partie supérieure, d'un orifice de sortie (9) également raccordé à la canalisation de mise à l'air et dans lequel :
a) la partie inférieure de l'enceinte comporte une coupelle interne circulaire (10) fixe maintenue espacée de la paroi interne de l'enceinte (7) et de l'orifice inférieur d'entrée (8), et
b) la coupelle est surmontée d'un équipage déplaçable verticalement comportant un flotteur (13) de forme générale tronconique ou sphérique et un pointeau supérieur (16) solidaire du flotteur (13) pouvant, en position haute de l'équipage, obturer l'orifice supérieur de l'enceinte, des moyens étant prévus pour provoquer un déplacement vers le haut de l'équipage suite à une inclinaison de l'enceinte, caractérisé en ce que l'espace entre la paroi interne de l'enceinte et la coupelle est profilé de façon à former un venturi (18) qui est maintenu en relation par au moins un passage (20) avec le volume (19) compris entre la coupelle (10) et le flotteur (13) de l'équipage de façon telle que le passage des vapeurs de carburant dans cet espace entraîne une mise en dépression de ce volume.

2. Clapet de sécurité selon la revendication 1 caractérisé en ce que le moyen pour provoquer le déplacement vers le haut de l'équipage suite à une inclinaison de l'enceinte est constitué par une bille (15) qui est disposée dans la coupelle (10) de profil interne conique, la partie inférieure du flotteur (13) de l'équipage mobile pouvant prendre appui sur cette bille.

3. Clapet de sécurité selon la revendication 1 caractérisé en ce que le moyen pour provoquer le déplacement vers le haut de l'équipage suite à une inclinaison de l'enceinte est constitué par une bille (15) disposée dans la coupelle (10) de profil interne plan et pouvue en son centre d'une encoche sphérique (12), la partie inférieure du flotteur (13) de l'équipage pouvant prendre appui sur cette bille et étant profilée en forme de cone inversé.

4. Clapet de sécurité selon la revendication 1 caractérisé en ce que le passage (20) est constitué par un espace maintenu entre le bord de la coupelle (10) et la partie inférieure de la base creuse de l'équipage

5. Clapet de sécurité selon la revendication 1 caractérisé en ce que le pointeau (16) est équipé d'un joint membrane (17) tel que la fuite maximum de 0 à 10 KPa soit de 0.005 l/min.

6. Clapet de sécurité selon la revendication 1 caractérisé en ce que le pointeau (16) est équipé d'un clapet de surpression (23).

7. Clapet de sécurité selon la revendication 1 caractérisé en ce que l'enceinte (7), la coupelle (10) et l'équipage sont réalisés à partir de matières thermoplastiques.

## Claims

1. Safety valve, for a fuel-tank (1) vent pipe (4), which allows venting and prevents the passage of liquid fuel in any case and comprises a closed containment (7) equipped, in its lower part, with an inlet port (8) connected to the vent pipe (4) and, in its upper part, with an outlet port (9) likewise connected to the vent pipe, and in which :
a) the lower part of the containment comprises a stationary circular inner cup (10) kept spaced from the inner wall of the containment (7) and from the lower inlet port (8), and
b) the cup is surmounted by a vertically displaceable assembly comprising a float (13) of general frusto-conical or spherical shape and an upper needle (16) which is fixed to the float (13) and which, in the high position of the assembly, can close off the upper port of the containment, means being provided, for causing an upward displacement of the assembly as a result of an inclination of the containment, characterised in that the space between the inner wall of the containment and the cup is profiled so as to form a Venturi tube (18) which is kept in relationship via at least one passage (20) with the volume (19) located between the cup (10) and the float (13) of the assembly, in such a way that the passage of the fuel vapours into this space causes this volume to be put under a vacuum.

2. Safety valve according to Claim 1, characterised in that the means for causing the upward displacement of the assembly as a result of an inclination of the containment consists of a ball (15) which is arranged in the cup (10) of conical inner profile, the lower part of the float (13) of the movable assembly being capable of bearing on this ball.

3. Safety valve according to Claim 1, characterised in that the means for causing the upward displacement of the assembly as a result of an inclination of the containment consists of a ball (15) which is arranged in the cup (10) of plane inner profile equipped at its centre with a spherical indentation (12), the lower part of the float (13) of the assembly being capable of bearing on this ball and being profiled in the form of an inverted cone.

4. Safety valve according to Claim 1, characterised in that the passage (20) consists of a space maintained between the edge of the cup (10) and the lower part of the hollow base of the assembly.

5. Safety valve according to Claim 1, characterised in that the needle (16) is equipped with a diaphragm gasket (17) such that the maximum leakage from 0 to 10 kPa is 0.005 l/min.

6. Safety valve according to Claim 1, characterised in that the needle (16) is equipped with a relief valve (23).

7. Safety valve according to Claim 1, characterised in that the containment (7), the cup (10) and the assembly are produced from thermoplastic.

## Patentansprüche

1. Sicherheitsventil für einen die Lüftung gestattenden und den Durchtritt von flüssigem Kraftstoff auf alle Fälle verhindernden Lüftungskanal (4) eines Kraftstoffbehälters (1), umfassend ein geschlossenes Gehäuse (7), das an seinem unteren Teil mit einer mit dem Lüftungskanal (4) verbundenen Eintrittsöffnung (8) und an seinem oberen Teil mit einer gleichfalls mit dem Lüftungskanal verbundenen Austrittsöffnung (9) ausgestattet ist, und bei dem:
a) der untere Teil des Gehäuses einen im Abstand von der Innenwand des Gehäuses (7) und von der unteren Eintrittsöffnung (8) gehaltenen ortsfesten inneren runden Teller (10) umfaßt, und
b) der Teller von einem vertikal beweglichen Organ gekrönt ist, umfassend einen Schwimmer (13) mit allgemein kegelstumpförmiger oder kugelförmiger Gestalt und eine als Einheit mit dem Schwimmer (13) ausgebildete obere Düsennadel (16), welche die obere Öffnung des Gehäuses in einer oberen Stellung des Organs verschließen kann, wobei Einrichtungen vorgesehen sind, um nach einer Schrägstellung des Gehäuses eine Aufwärtsbewegung des Organs hervorzurufen, dadurch gekennzeichnet, daß daß der Raum zwischen der Innenwand des Gehäuses und dem Teller so geformt ist, daß er eine Venturidüse (18) bildet, die durch mindestens einen Durchlaß (20) derart in Verbindung mit dem zwischen dem Teller (10) und dem Schwimmer (13) des Organs eingeschlossenen Volumen gehalten wird, daß der Durchtritt von Kraftstoffdämpfen in diesem Raum eine Beaufschlagung dieses Volumens mit Unterdruck zur Folge hat.

2. Sicherheitsventil nach Anspruch 1, dadurch gekennzeichnet, daß die Einrichtung zum Hervorrufen der Aufwärtsbewegung des Organs nach einer Schrägstellung des Gehäuses von einer Kugel (15) gebildet wird, die in dem Teller (10) mit konischem Innenquerschnitt angeordnet ist, wobei der untere Teil des Schwimmers (13) des beweglichen Organs auf dieser Kugel zur Anlage kommen kann.

3. Sicherheitsventil nach Anspruch 1, dadurch gekennzeichnet, daß die Einrichtung zum Hervorrufen der Aufwärtsbewegung des Organs nach einer Schrägstellung des Gehäuses von einer Kugel (15) gebildet wird, die in dem Teller (10) mit ebenem Innenquerschnitt angeordnet ist, welcher in seiner Mitte mit einer runden Vertiefung (12) versehen ist, wobei der untere Teil des Schwimmers (13) des Organs auf dieser Kugel zur Anlage kommen kann und einen Querschnitt in Form eines umgekehrten Kegels aufweist.

4. Sicherheitsventil nach Anspruch 1, dadurch gekennzeichnet, daß der Durchlaß (20) durch einen zwischen dem Rand des Tellers (10) und dem unteren Teil des hohlen Fußes des Organs freigehaltenen Raum gebildet wird.

5. Sicherheitsventil nach Anspruch 1, dadurch gekennzeichnet, daß die Düsennadel (16) mit einer Membrandichtung (17) ausgestattet ist, so daß der maximale Leckverlust von 0 bis 10 kPa 0,005 l/min beträgt.

6. Sicherheitsventil nach Anspruch 1, dadurch gekennzeichnet, daß die Düsennadel (16) mit einem Überdruckventil (23) ausgestattet ist.

7. Sicherheitsventil nach Anspruch 1, dadurch gekennzeichnet, daß das Gehäuse (7), der Teller (10) und das Organ aus Kunststoffen gefertigt sind.
